Europäisches Patentamt

(19) European Patent Office

Office européen des brevets

(11) Publication number: **0 227 484 B1**

(12) **EUROPEAN PATENT SPECIFICATION**

(45) Date of publication of patent specification: **23.10.91**  (51) Int. Cl.⁵: **B60R 11/02**

(21) Application number: **86310139.0**

(22) Date of filing: **24.12.86**

(54) Electrical apparatus for in-car entertainment.

(30) Priority: **25.12.85 JP 290740/85**

(43) Date of publication of application:
**01.07.87 Bulletin 87/27**

(45) Publication of the grant of the patent:
**23.10.91 Bulletin 91/43**

(84) Designated Contracting States:
**DE FR GB IT**

(56) References cited:
| | |
|---|---|
| **EP-A- 0 012 280** | **DE-A- 3 513 114** |
| **DE-A- 3 545 233** | **DE-U- 8 435 067** |
| **DE-U- 8 611 600** | **GB-A- 2 153 427** |
| **US-A- 4 211 995** | |

(73) Proprietor: **SHINTOM KABUSHIKI KAISHA**
**19-1 Minowacho 2-chome Kouhoku-ku**
**Yokohama-shi Kanagawa(JP)**

(72) Inventor: **Akiyama, Tsuneo**
**c/o Shintom KK 1146 Minowacho Kouhoku-**
**ku**
**Yokohama-shi Kanagawa(JP)**

(74) Representative: **Hall, Graeme Keith et al**
**Frank B. Dehn & Co. Imperial House 15-19**
**Kingsway**
**London WC2B 6UZ(GB)**

## Description

The present invention relates to electrical apparatus such as a radio receiver and/or tape player for an automobile that can be mounted to an interior panel such as a dashboard or console panel and in particular to such apparatus having a theft detector which can respond to the detachment of the apparatus from an interior panel.

Various types of mounting structures for mounting electrical apparatus to an interior panel of an automobile have been known. In the U.S. Patent No. 4,211,976, issued July 8, 1980, entitled "COMPOUND ACOUSTIC APPARATUS FOR AUTOMOTIVE VEHICLES" and owned by the present applicants, an apparatus is mounted from behind the interior panel into a rectangular aperture formed in the panel with only the operating section of the apparatus projecting through the aperture to the front of the panel. The front of the apparatus housing is abutted against the rear surface of the interior panel and they are firmly fixed to each other. In this rear surface mounting structure, it is impossible to withdraw the apparatus into the interior of the automobile without removing the interior panel, and therefore little care needs to be taken to guard against the theft of the apparatus. However, in this type of a mounting structure, it is a very cumbersome operation to install the apparatus.

Many recent in-car entertainment apparatuses for automobiles, such as tape players and radio receivers, use a front mounting structure wherein the apparatus is mounted from the front of an interior panel into a rectangular aperture formed in the panel. In this type of mounting structure, the apparatus housing is made of a size which enables it to be passed through the rectangular aperture formed in the interior panel and is fixed to the interior panel with the housing inserted in the aperture. A method where mount springs engageable with the rear surface of the interior panel are provided on the opposite side surfaces of the apparatus housing is one of the well known types of front mounting structures, and in this method once the apparatus is mounted into the interior panel, it is not easy to remove the apparatus from the interior panel. This is desirable in view of the prevention of theft, but the maintenance and inspection or repair of the apparatus become difficult. It is also popular to form the front section of the apparatus housing with a flange section larger than the rectangular aperture, and the flange section is fixed to the front surface of the interior panel by screws or the like. A mounting structure wherein wedge members engageable with the rear surface of the interior panel are provided on opposite side surfaces of the apparatus housing such that they can be depressed, the wedge members being moved by rotating operating screws secured to the front surface of the apparatus housing is also known. This wedge type front mount structure is disclosed, for example, in Japanese Laid-Open Patent Application No. 61-53797, laid open on March 17, 1986, and owned by the present applicant. While the mounting structure wherein screws are operated on the front side of the interior panel facilitates the attachment and detachment of the apparatus to and from the interior panel, there are consequently dangers that the apparatus may be stolen.

Another example of the prior art is Figs. 1 and 2 of GB-A-2153427 which discloses the preamble of claim 1.

U.S. Patent No. 4,494,114, issued on January 15, 1985 and entitled "SECURITY ARRANGEMENT FOR AND METHOD OF RENDERING MICROPROCESSOR-CONTROLLED ELECTRONIC EQUIPMENT INOPERATIVE AFTER OCCURRENCE OF DISABLING EVENT" has suggested an electrical apparatus for automobiles that has a microprocessor for rendering the apparatus inoperative when the apparatus is moved mechanically from the interior panel. Although this suggestion is quite unique and is quite effective in practice, the cost of the apparatus is high.

Accordingly it is an object of the present invention to provide an electrical apparatus for automobiles, such as an in-car cassette player or radio, that has a front type mounting structure which can facilitate the attachment and detachment of the apparatus to and from an interior panel, provided with means to detect the detachment of the apparatus from the interior panel without permission.

Accordingly the present invention is characterised in that an electric circuit arrangement is positioned in said housing and includes switch means capable of being operated from the front side of said interior panel through said aperture, and in that said protective member has means for operating said switch means, wherein when said protective member is removed said switch means is operated and a detection electric current is passed to said electric circuit.

By means of this arrangement, at least in its preferred forms, when the detachment of an apparatus from an interior panel without permission is detected, an exclusive alarm buzzer may be actuated or a known automobile theft preventive apparatus or automobile theft informing apparatus may be triggered. In some cases, the present apparatus can be used as a trigger of an inactivating circuit disclosed in U.S. Patent No. 4,494,114 mentioned above.

According to a desirable embodiment of the present invention, said mounting means has a front operating wedge-shaped mounting structure as disclosed in Japanese Laid-Open Patent Application No. 61-53797 mentioned above. Said electric circuit arrangement includes an alarm buzzer that issues a warning upon response to the removal of said protective member, which is not intended to limit the present invention.

Two embodiments of the present invention will now be described by way of example and with reference to the accompaning drawings, in which:-

Fig. 1 is a perspective view, with parts exploded, of an apparatus according to an embodiment of the present invention;

Fig. 2 is a side elevational view, with parts in section, of the apparatus shown in Fig. 1; and

Fig. 3 is a side elevational view of a modified embodiment of the apparatus shown in Fig. 2.

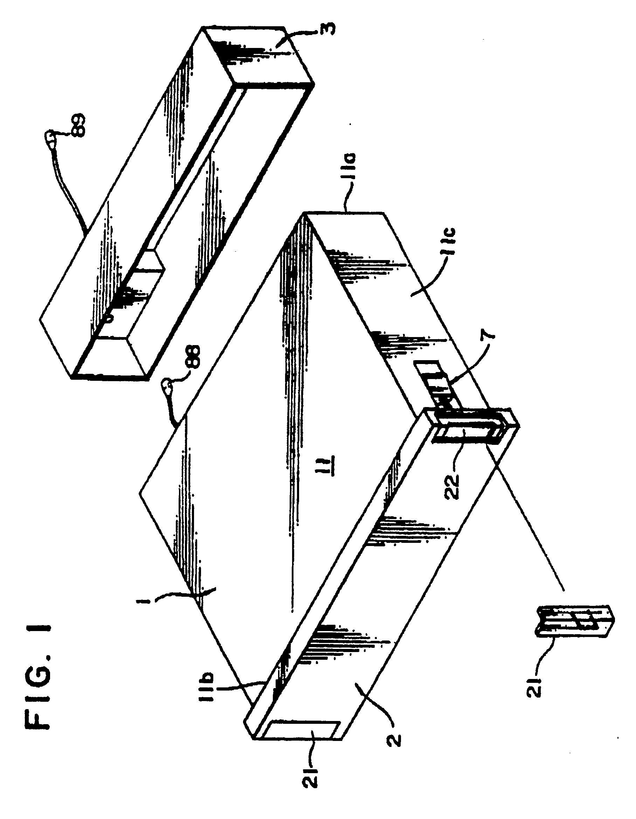

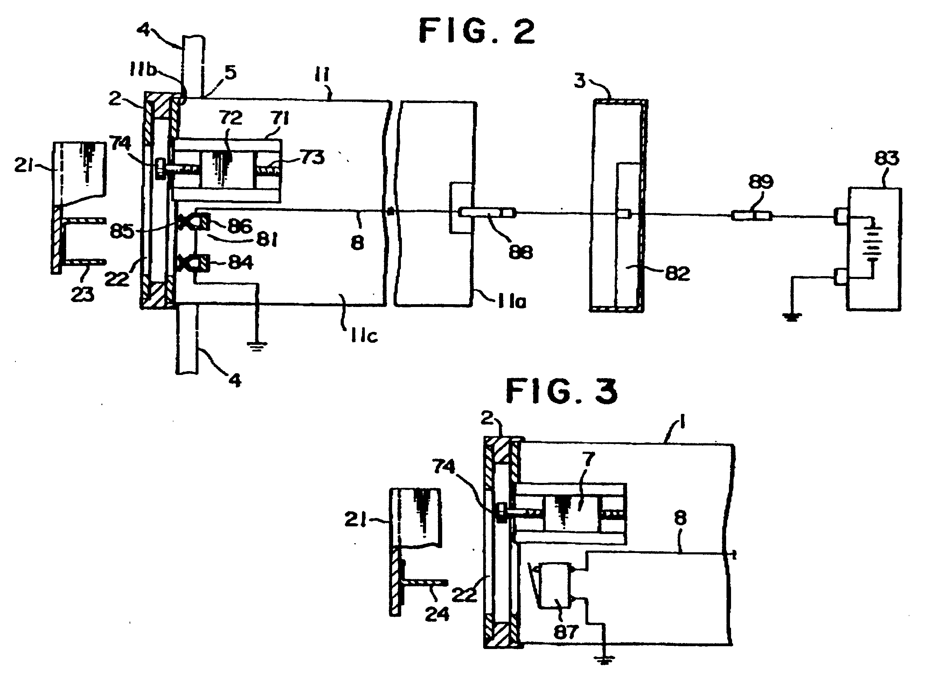

Referring to Figs. 1 and 2, an electrical apparatus, such as a radio, for automobiles is shown that has an operating unit 2 on the front of a main body unit 1 and an attachment frame 3 on the rear of the main body unit 1. Although the operating unit 2 is drawn roughly for the sake of clarity, the operating unit 2, in practice, is provided with a tuning dial, various operating buttons for a radio receiver and a tape player cassette receiving opening and various operating buttons as in the case of U.S. Patent No. 4,211,976 mentioned above. The various components required for the radio receiver and a tape player are housed in the main body unit l.

An interior panel 4 (see Fig. 2) such as a dashboard of an automobile is provided with a rectangular aperture 5 in a known manner whereby the apparatus can be attached. The main body unit l includes a housing 11 of a size which may be fitted into the rectangular aperture 5 of the interior panel 4, and the housing 11 has a rear surface 11a that will be situated behind the interior panel 4, that is, will be situated in the dashboard, a front surface 11b that will be arranged in the aperture 5, and opposite side surfaces 11c each extending between the rear surface 11a and the front surface 11b. Each of the opposite side surfaces 11c of the housing 11 has a front operating and wedge-shaped mount structure 7 secured thereto and which is known per se. Since this mount structure is disclosed in above-mentioned Japanese Laid-Open Patent Application No. 61-53797, the mount structure will not be described in detail, but in brief, each of the mount structures has a guide frame 71 secured to the housing side surface 11c, a locking member 72 supported slidably along the guide frame 71 and a lead screw 73 for moving the locking member 72. The lead screw 73 is supported rotatably in the housing 11, and has at its end an operating knob 74 extending out of the front surface 11b of the housing 11, and by rotating the operating knob 74, the locking member 72 can be moved along the guide frame 71. In this case, the axis of the lead screw 73 is in a vertical plane slightly offset from the vertical plane where the housing side surface 11c is located, and therefore the locking member 72 that is moved along the axis of the lead screw 73, depending on its position, can be present in a plane in conformity with the housing side surface 11c, or can be positioned to project out of the housing side surface 11c. By means of this structure, after the housing 11 is inserted into the aperture 5 of the interior panel 4, and when the lead screw 73 is rotated by the operating knob 74 to move the locking member 72 along the lead screw 73 and to be projected out of the housing side surface 11c, the locking member 72 is engaged with the interior panel 4 in a wedgelike manner so that the housing l can be firmly attached to the interior panel 4.

The operating unit 2 is firmly fixed to the front surface 11b of the housing 11 of the main body unit 1, and the opposite sides of the operating unit 2 are formed with notches 22 to which detachable protective covers 21 are attached. Each of the protective covers 21 covers the operating knob 74 extending into the notch 22 from the front surface 11b of the main body housing 11 thereby concealing the presence of the operating knob 74 from the outside.

An electric circuit arrangement 8 including a switch means 81 capable of being operated from the side of the front surface 11b is situated in the housing 11. The electric circuit arrangement 8 includes a theft detector 82 provided to the attachment frame 3 attached to the rear surface of the main body unit l and a power source 83 that may be a suitable battery in an automobile and will operate the theft detector 82 in response to the ON or OFF status of the switch means 81. The theft detector 82 may be an alarm buzzer or a trigger apparatus for a known automobile theft preventive apparatus or automobile theft informing apparatus. The switch means 81 and the theft detector 82 are connected via a connector 88 and the detector 82 and the power source 83 are connected similarly via a connector 89. In this embodiment, the switch means 81 consists of two switches 84 that are of the same type, and each of the switches 84 includes a pair of forked contact members 85 that are normally closed and are springy, and insulating blocks 86 supporting the contact members 85. The open ends of the pair of forked contact members 85 of each switch 84 are arranged opposite to the notch 22 of the operating unit 2. The protective cover 21 of the notch 22 is provided with two switch operating plates 23 of an electrical insulant, and when the protective cover 21 is attached to the notch 22, the switch operating plates 23 are inserted into the pairs of contact members 85 of the associated switch 84 thereby turning the switch means 81 OFF. In contrast, when the protective cover 21 is detached, the switch operating plates 23 leave the pairs of contact members 85 and the electric circuit arrangement 8 passing through the contact members 85 comes into operation. Thus, the apparatus can be prevented from being detached without permission. Further, in accordance with this embodiment, since the two switch operating plates 23 are secured to the protective cover 21, and are clamped by the contact members 85 when they are inserted between the pairs of forked contact members 85 of the respective associated switches 84, it is not required to provide an additional support structure for attaching the cover 21 to the housing 11 or the operating unit 2.

Referring to Fig. 3, instead of the switches 84 each having pairs of forked contact members 85 shown in Fig. 2, a known microswitch 87 is provided and a single operating rod 24 for controlling the microswitch 87 is attached to the protective cover 21.

Although an embodiment of the invention has been described in detail in the foregoing for the purposes of illustration, the invention is not limited by the embodiments. In particular, with respect to the front mount structure since only a particular embodiment has been described, it will be apparent to those skilled in the art that any other known front attaching and operating type mount structure may be substituted therefor. Furthermore the mounting means may be provided at only one or both sides of the housing. Similarly switch means may be provided at either only one or both sides of the housing.

## Claims

1. An electrical apparatus for an automobile that can be mounted into an interior panel (4) such as a dashboard of the automobile, said apparatus comprising a housing (11) which may be inserted into an aperture (5) in said panel (4), the housing (11) including a rear section (11a) that is to be positioned behind said interior panel (4), a front section (11b) that is to be exposed on the front side of said interior panel (4) and opposed side surface sections (11b) each extending between said rear surface section (11a) and said front surface section (11b), mounting means (7) for detachably fixing said housing (11) to said interior panel (4), said mounting means (7) having a manual operating member (74) provided to the front surface section (11b) of said housing (11), and a protective member (21) for covering said mounting operating member (74), characterised in that an electric circuit arrangement (8) is positioned in said housing and includes switch means (81) capable of being operated from the front side of said interior panel (4) through said aperture (5), and in that said protective member (4) has means (23) for operating said switch means (81), wherein when said protective member (21) is removed said switch means (81) is operated and a detection electric current is passed to said electric circuit (8).

2. Apparatus as claimed in claim 1, wherein said switch means (81) comprises two electric switches (84,86) each including a pair of normally closed resilient forked contact members (85), and said switch operating means (23) comprises plates of an electrical insulator for releasing the contact connections of said pairs of contact members (85) by introducing said switch operating means (23) between said contact members (85).

3. Apparatus as claimed in claim 1 wherein said switch means (81) comprises a microswitch (87).

4. Apparatus as claimed in any preceding claim, wherein said electric circuit arrangement includes an alarm buzzer.

5. Apparatus as claimed in any preceding claim, wherein said housing (11) includes an operating unit (2) fixed to its front section (11b), said mounting operating member (74) being operated through a notch (22) formed in said operating unit (2), and said protective member (21) being arranged to cover said notch (22).

## Revendications

1. Appareil électrique pour une automobile qui peut être monté dans un panneau intérieur (4) tel que le tableau de bord de l'automobile, ledit appareil comprenant un boîtier (11) qui peut être inséré dans une ouverture (5) dudit panneau (4), le boîtier (11) comportant une partie arrière (11a) destinée à être positionnée derrière ledit panneau intérieur (4), une partie avant (11b) destinée à être exposée sur la face avant dudit panneau intérieur (4) et des surfaces latérales-opposées (11c) s'étendant chacune entre ladite partie arrière (11a) et ladite partie avant (11b), un organe de montage (7) pour fixer de manière amovible ledit boîtier (11) audit panneau intérieur (4), ledit organe de montage (7) ayant un élément de manoeuvre manuelle (74) situé sur la surface avant (11b) dudit boîtier (11), et un élément de protection (21) pour recouvrir ledit élément de manoeuvre manuelle (74), caractérisé en ce qu'un circuit électrique (8) est disposé dans ledit boîtier et comporte un organe de commutation (81) susceptible d'être actionné depuis la face avant dudit panneau intérieur (4) à travers ladite ouverture (5) et en ce que ledit élément de protection (21) a un organe (23) pour actionner ledit organe de commutation (81), dans lequel quand ledit élément de protection (21) est enlevé ledit organe de commutation (81) est actionné et un courant électrique de détection passe dans ledit circuit électrique (8).

2. Appareil suivant la revendication 1, dans lequel ledit organe de commutation (81) comprend deux commutateurs électriques (84, 86) comportant chacun une paire d'éléments de contact (85) élastiques, normalement fermés et en forme de fourche, et ledit organe (23) de manoeuvre de commutateur comprend des plaques en un isolant électrique pour relâcher les connexions des contacts desdites paires d'éléments de contact (85) au moyen de l'introduction dudit organe (23) de manoeuvre de commutateur entre lesdits éléments de contact (85).

3. Appareil suivant la revendication 1, dans lequel ledit organe de commutation (81) comprend un micro-interrupteur (87).

4. Appareil suivant l'une quelconque des revendications précédentes, dans lequel ledit circuit électrique comporte un ronfleur d'alarme.

5. Appareil suivant l'une quelconque des revendications précédentes, dans lequel ledit boîtier (11) comporte un panneau de commande (2) fixé à sa partie avant (11b), ledit élément de manoeuvre manuelle (74) étant actionné à travers une encoche (22) pratiquée dans ledit panneau de commande (2), et ledit élément de protection (21) étant disposé pour couvrir ladite encoche (22).

**Patentansprüche**

1. Elektrisches Gerät für ein Fahrzeug, zur Montage in ein inneres Wandteil (4), wie beispielsweise dem Armaturenbrett des Fahrzeugs, umfassend ein in eine Öffnung (5) des Wandteiles (4) einsetzbares Gehäuse (11), das einen hinter das Wandteil (4) zu positionierenden rückseitigen Abschnitt (11a), einen an der Vorderseite des Wandteiles (4) zu positionierenden vorderseitigen Abschnitt (11b) und einander gegenüberliegende, sich jeweils zwischen dem rückseitigen Abschnitt (11a) und dem vorderseitigen Abschnitt (11b) erstreckende Seitenabschnitte (11c) aufweist. Befestigungsmittel (7) zur lösbaren Befestigung des Gehäuses (11) an das Wandteil (4), die zum vorderseitigen Abschnitt (11b) des Gehäuses (11) hin ein manuelles Betätigungsteil (74) aufweisen, und ein Schutzelement (21) zur Abdeckung des Betätigungsteils (74),
**dadurch gekennzeichnet,**
daß eine elektrische Schaltanordnung (8) in dem Gehäuse angeordnet ist und eine Schalteinrichtung (81) aufweist, die von der Vorderseite des Wandteiles (4) her durch die Öffnung (5) hindurch betätigbar ist, und daß das Schutzelement (21) Mittel (23) zur Betätigung der Schalteinrichtung (81) aufweist, wobei die Schalteinrichtung (81) betätigt wird und ein elektrischer Detektionsstrom zu der elektrischen Schaltung (8) fließen kann, wenn das Schutzelement (21) entfernt wird.

2. Elektrisches Gerät nach Anspruch 1,
**dadurch gekennzeichnet,**
daß die Schalteinrichtung (81) zwei elektrische Schalter (84, 86) umfaßt, von denen jeder ein Paar federnde gabelartige Kontaktelemente (85) aufweist, die normalerweise beschlossen sind, und daß die Schaltbetätigungsmittel (23) Platten aus einem elektrisch isolierenden Material aufweisen, die die Kontaktverbindungen der Paare von Kontaktelementen (85) trennen, wenn die Schaltbetätigungsmittel (23) zwischen die Kontaktelemente (85) gebracht werden.

3. Elektrisches Gerät nach Anspruch 1,
**dadurch gekennzeichnet,**
daß die Schalteinrichtung (81) einen Mikroschalter (87) umfaßt.

4. Elektrisches Gerät nach wenigstens einem der vorhergehenden Ansprüche,
**dadurch gekennzeichnet,**
daß die elektrische Schaltanordnung einen akustischen Alarmgeber aufweist.

5. Elektrisches Gerät nach wenigstens einem der vorhergehenden Ansprüche,
**dadurch gekennzeichnet,**
daß das Gehäuse (11) eine an seinem vorderseitigen Abschnitt (11b) befestigte Bedienungseinheit (2) aufweist, daß das Betätigungsteil (74) durch einen in der Bedienungseinheit (2) geformten Ausschnitt (22) hindurch betätigbar ist und daß das Schutzelement (21) zur Abdeckung des Ausschnitts (22) vorgesehen ist.

FIG. 1

EP 0 227 484 B1

FIG. 2

FIG. 3